# EUROPÄISCHE PATENTSCHRIFT

(11) **EP 3 513 159 B1**
(45) Veröffentlichungstag und Bekanntmachung des Hinweises auf die Patenterteilung: **21.02.2024**
(21) Anmeldenummer: 17780298.0
(22) Anmeldetag: 13.09.2017
(51) Int. Cl.: G01M 1/32

(54) **VORRICHTUNG UND VERFAHREN ZUR ANBRINGUNG EINES AUSGLEICHSGEWICHTS AN EINER BEFESTIGUNGSFLÄCHE AN EINER INNENSEITE EINER FELGE**
DEVICE AND METHOD FOR ATTACHING A BALANCING WEIGHT TO A MOUNTING SURFACE ON AN INNER SIDE OF A WHEEL RIM
DISPOSITIF ET PROCÉDÉ POUR APPLIQUER UN CONTREPOIDS SUR UNE SURFACE DE FIXATION AU NIVEAU D'UNE FACE INTERNE D'UNE JANTE

(30) Priorität: 15.09.2016 DE 102016117434
(43) Veröffentlichungstag der Anmeldung: 24.07.2019
(73) Patentinhaber: Schenck RoTec GmbH, 64293 Darmstadt (DE)
(72) Erfinder: ROGALLA, Martin, 64297 Darmstadt (DE); PEINELT, Andreas, 64319 Pfungstadt (DE); WEISSBACH, Kevin, 09423 Gelenau (DE)
(74) Vertreter: Haarpatent Patentanwälte Krämer Meyer
(86) Internationale Anmeldenummer: PCT/DE2017/100774
(87) Internationale Veröffentlichungsnummer: WO 2018/050162

(56) Entgegenhaltungen:
- EP-A1- 1 759 893
- EP-A2- 0 681 169
- EP-A2- 1 124 123
- DE-A1-102004 048 896

## Beschreibung

Die Erfindung betrifft eine Vorrichtung zur Anbringung eines Ausgleichsgewichts an einer Befestigungsfläche an einer Innenseite einer Felgenschüssel einer Felge, umfassend einen Befestigungskopf, der so bemessen ist, dass er in die Felgenschüssel hinein passt und der ein relativ zur Felge radial verschiebbares Tragelement umfasst, an dem ein Tastelement axial beweglich angeordnet ist. Ferner betrifft die Erfindung ein Verfahren zur Anbringung eines Ausgleichsgewichts an einer Befestigungsfläche an einer Innenseite einer Felgenschüssel einer Felge.

Beim Auswuchten von Fahrzeugrädern werden festgestellte Unwuchten durch die Befestigung von Ausgleichsgewichten an den Felgen ausgeglichen, da ein Materialabtrag dort ausscheidet. Hierzu werden bei Stahlfelgen die Ausgleichsgewichte am innenliegenden und außenliegenden Felgenrand der entsprechenden Ausgleichsstellen festgeklemmt. Dahingegen werden bei Leichtmetallfelgen die Ausgleichsgewichte meist in der Felgenschüssel in zwei axial voneinander entfernten Ausgleichsebenen angeklebt.

Aus DE 10 2007 014 461 A1 ist ein Verfahren zum Umwuchtausgleich von Fahrzeugrädern bekannt, bei dem mit einem Auswuchtkopf und einer programmgesteuerten Handhabungsvorrichtung Klebegewichte an mindestens einer ermittelten Ausgleichsfläche innerhalb eines Fahrzeugrades angeklebt werden.

Ferner ist aus DE 10 2010 002 002 A1 eine vollautomatische Anlage für den Unwuchtausgleich von Fahrzeugrädern bekannt, bei der die Unwucht der Fahrzeugräder zunächst in einer Unwuchtmessstation gemessen wird und die Fahrzeugräder dann in einer Ausgleichsstation gefördert werden. In der Ausgleichsstation werden die anhand der Messwerte von einer automatischen Ablängvorrichtung in passender Größe erzeugten Ausgleichsgewichte, die mit einer Klebstoffschicht versehen sind, mit Hilfe einer Befestigungsvorrichtung an den Fahrzeugrädern durch Kleben befestigt. Die Befestigung erfolgt mit Hilfe eines Setzkopfes, der mit zwei Aufnahmen für zwei Ausgleichsgewichte versehen ist und diese nacheinander in zwei Ausgleichsebenen des für sie bestimmten Fahrzeugrades befestigen kann.

DE 10 2013 108 048 B4 beschreibt eine Vorrichtung zum Befestigen von Ausgleichsgewichten zum Unwuchtausgleich an einem auszuwuchtenden drehbaren Körper, mit einer Bereitstellungseinheit, die nacheinander einzelne Ausgleichsgewichte bereitstellen kann, einer Befestigungsvorrichtung, die zur Anbringung der Ausgleichsgewichte an einem auszuwuchtenden drehbaren Körper bestimmt und ausgebildet ist und die eine erste Aufnahme für ein erstes Ausgleichsgewicht und eine zweite Aufnahme für ein zweites Ausgleichsgewicht aufweist.

EP 0 681 169 A2 offenbart eine Vorrichtung zum Befestigen eines eine Klebeschicht aufweisenden Ausgleichsgewichts an einer Unwuchtausgleichsstelle eines Scheibenrades eines Kraftfahrzeugrades mit einer Halteeinrichtung, die wenigstens zwei Halteteile zum Festhalten des Ausgleichsgewichtes mit Federvorspannung aufweist, und einer Führungseinrichtung, mit welcher die Halteeinrichtung an die Ausgleichsstelle führbar ist, und eine Kante der mit der Klebeschicht versehenen Fläche des Ausgleichsgewichtes an die Ausgleichsstelle anlegbar ist und durch zur Ausgleichsstelle hin gerichteten und auf das Ausgleichsgewicht ausgeübten Druck das Ausgleichsgewicht aus der Halteeinrichtung freigebbar und um seine an der Ausgleichsstelle anliegende Kante für das Andrücken der Klebeschicht schwenkbar ist.

Ferner offenbart EP 1 124 123 A2 eine Vorrichtung zum Befestigen von eine Klebeschicht aufweisenden Ausgleichsgewichten zum Unwuchtausgleich an einer Befestigungsfläche eines Fahrzeugrades. Die Vorrichtung weist eine Halteeinrichtung mit zwei Halteteilen zum Festhalten eines Ausgleichsgewichts und einem an eine Rückenfläche des Ausgleichsgewichts andrückbaren Andrückelement und eine Führungseinrichtung auf, mit welcher die Halteeinrichtung an die Unwuchtausgleichsstelle der Befestigungsfläche führbar und dort andrückbar ist. Das Andrückelement hat eine in Abhängigkeit von der Andrückkraft verformbare Andrückfläche, an der das Ausgleichsgewicht mit seiner Rückenfläche anliegt. Die Andrückfläche hat in der unbelasteten Grundstellung des Andrückelements eine solche Form, dass die Andrückkraft im mittleren Bereich des Ausgleichsgewichts übertragen wird. Mit wachsender Andrückkraft ist die Andrückfläche derart verformbar, dass die Andrückkraft auch auf die Enden des Ausgleichsgewichts übertragen wird.

Aus Gewichtsgründen werden häufig Leichtmetallfelgen bzw. Scheibenräder mit Hinterschnitt eingesetzt, bei denen vor der Speichenwurzel ein Hohlraum vorliegt. Die Ausgleichsgewichte sollen vorzugsweise in eine dort vorhandene Ringfläche (Hinterschnittringfläche) eingesetzt werden.

Bei Felgen mit einem Hinterschnitt ist der zulässige Bereich zum Anbringen eines Ausgleichsgewichtes in axialer Richtung außerordentlich begrenzt. Dies hängt im Wesentlichen damit zusammen, dass die Felgenkontur auf der dem Reifen zugewandten Seite festgelegt ist, was dazu führt, dass die Höhe der Befestigungsfläche, die der Anbringung des Ausgleichsgewichts dient, stark limitiert ist. Das Ausgleichsgewicht darf nicht in die Radien oberhalb oder unterhalb der Befestigungsfläche ragen, was eine Reduzierung der Haftfähigkeit der Ausgleichsgewichte zur Folge hätte. Ein automatisches Auswuchten von Fahrzeugrädern mit Hinterschnitt ist aus DE 10 2007 014 461 B4 bekannt. Die Aufwalzrolle zur Anbringung des Klebegewichtes weist eine konische Aufwalzfläche auf, so dass die Hinterschnittringfläche durch einen tangentialen Halteeinrichtung mit zwei Halteteilen zum Festhalten eines Ausgleichsgewichts und einem an eine Rückenfläche des Ausgleichsgewichts andrückbaren Andrückelement und eine Führungseinrichtung auf, mit welcher die Halteeinrichtung an die Unwuchtausgleichsstelle der Befestigungsfläche führbar und dort andrückbar ist. Das Andrückelement hat eine in Abhängigkeit von der Andrückkraft verformbare Andrückfläche, an der das Ausgleichsgewicht mit seiner Rückenfläche anliegt. Die Andrückfläche hat in der unbelasteten Grundstellung des Andrückelements eine solche Form, dass die Andrückkraft im mittleren Bereich des Ausgleichsgewichts übertragen wird. Mit wachsender Andrückkraft ist die Andrückfläche derart verformbar, dass die Andrückkraft auch auf die Enden des Ausgleichsgewichts übertragen wird.

EP 1 759 893 A1 beschreibt ein Verfahren zum Auswuchten eines Reifens, dass das Bestimmen der Stelle und der Menge an Ausgleichsmaterial umfasst, die zum Korrigieren einer Unwucht des Reifens benötigt wird. Hiernach wird das Ausgleichsmaterial mit einer ersten Viskosität auf die Innenfläche aufgebracht, woraufhin sich das Ausgleichsmaterial umwandelt, um eine zweite Viskosität aufzuweisen, die höher ist als die erste Viskosität, und an der Innenfläche des Reifens an der Stelle des Aufbringens befestigt bleibt.

Aus DE 10 2004 048896 A1 ist eine Vorrichtung zum Ankleben von mit einer Klebstoffschicht versehenen Ausgleichsgewichten zum Unwuchtausgleich an der Innenfläche eines Fahrzeugrades bekannt. Die Vorrichtung weist eine Stütze auf, die in ihrer Länge einstellbar und in der eingestellten Länge feststellbar ist. An einem Ende der Stütze ist ein Widerlager zum Ansetzen an der Innenfläche des jeweiligen Fahrzeugrades und an dem anderen, dem Widerlager entgegengesetzten Ende eine pneumatisch oder hydraulisch betätigbare Anpressvorrichtung mit einem flexiblen, an die Rückseite eines Ausgleichsgewichts anlegbaren Schlauch vorgesehen, der mit Druck beaufschlagbar ist.

Aus Gewichtsgründen werden häufig Leichtmetallfelgen bzw. Scheibenräder mit Hinterschnitt eingesetzt, bei denen vor der Speichenwurzel ein Hohlraum vorliegt. Die Ausgleichsgewichte sollen vorzugsweise in eine dort vorhandene Ringfläche (Hinterschnittringfläche) eingesetzt werden.

Bei Felgen mit einem Hinterschnitt ist der zulässige Bereich zum Anbringen eines Ausgleichsgewichtes in axialer Richtung außerordentlich begrenzt. Dies hängt im Wesentlichen damit zusammen, dass die Felgenkontur auf der dem Reifen zugewandten Seite festgelegt ist, was dazu führt, dass die Höhe der Befestigungsfläche, die der Anbringung des Ausgleichsgewichts dient, stark limitiert ist. Das Ausgleichsgewicht darf nicht in die Radien oberhalb oder unterhalb der Befestigungsfläche ragen, was eine Reduzierung der Haftfähigkeit der Ausgleichsgewichte zur Folge hätte. Ein automatisches Auswuchten von Fahrzeugrädern mit Hinterschnitt ist aus DE 10 2007 014 461 B4 bekannt. Die Aufwalzrolle zur Anbringung des Klebegewichtes weist eine konische Aufwalzfläche auf, so dass die Hinterschnittringfläche durch einen tangentialen Aufwalzvorgang erreichbar ist. Nachteilig ist jedoch, dass die Robotersteuerung sehr aufwendig ist und die Klebegewichte nicht exakt platziert werden können. Alternativ kann die Hinterschnittfläche vor der Anbringung der Ausgleichsgewichte vermessen werden, was jedoch durch die Lackierung der Felge erschwert wird und zudem zeitaufwendig ist.

Der Erfindung liegt die Aufgabe zugrunde, eine Vorrichtung und ein Verfahren der eingangs genannten Art zu schaffen, die in kurzen Taktzeiten eine Anbringung selbstklebender Ausgleichsgewichte an konkav gekrümmten Befestigungsflächen einer Felge zu ermöglichen, ohne dass hierfür zuvor eine Vermessung der Befestigungsfläche erfolgen muss.

Die Aufgabe wird nach der Erfindung durch eine Vorrichtung gemäß Anspruch 1 und ein Verfahren gemäß Anspruch 10 gelöst. Weiterbildungen und vorteilhafte Ausführungsbeispiele der Erfindung sind in den abhängigen Ansprüchen angegeben.

Die Aufgabe wird erfindungsgemäß dadurch gelöst, dass eine Vorrichtung zur Anbringung eines Ausgleichsgewichts an einer Befestigungsfläche an einer Innenseite einer Felgenschüssel einer Felge bereitgestellt wird, umfassend einen Befestigungskopf, der so bemessen ist, dass er in die Felgenschüssel hinein passt und der ein relativ zur Felge radial verschiebbares Tragelement umfasst, an dem ein Tastelement axial beweglich angeordnet ist, wobei das Tastelement an seinem freien Ende einen Tastkopf aufweist, der derart ausgestaltet ist, dass er in einen Hohlraum der Felge hinein bewegbar ist und der Tastkopf eine zur Felgeninnenseite hin ausgerichtete und eine konvexe Krümmungsfläche aufweisende Aufnahme für mindestens ein Ausgleichsgewicht umfasst und die der Felgeninnenseite zugewandten Seite des Tastkopfs entsprechend der Krümmung der Felgeninnenseite radial gebogen ist, wobei benachbart zur Aufnahme eine konvexe Kontaktfläche mit einem kreisförmig gebogenen Randbereich angeordnet ist, und wobei der Befestigungskopf derart ausgestaltet ist, dass die Kontaktfläche in Kontakt mit einer Begrenzungsfläche der Innenseite bring- und an dieser entlang verschiebbar ist, bis das Ausgleichsgewicht radial mit der Befestigungsfläche in Kontakt gelangt.

Durch die erfindungsgemäße Vorrichtung ist insbesondere das Anbringen von einem als Klebegewicht ausgestalteten Ausgleichsgewicht an die an der Felgeninnenseite eingebrachte Hinterschnittringfläche möglich, ohne dass hierfür eine vorherige Vermessung der in der Hinterschnittringfläche vorgesehenen Befestigungsfläche notwendig ist. Aufgrund der beengten Raumverhältnisse bei Felgen mit Hinterschnitt ist das kollisionsfreie Fahren des Befestigungskopfs in die Anbringposition des Ausgleichsgewichts schwierig. Durch die erfindungsgemäße Ausgestaltung wird nicht nur das in Position bringen des Befestigungskopfs vereinfacht, sondern auch der gesamte Prozess des Anbringens und Entfernens des Befestigungskopfs beschleunigt.

Es wird ein mechanisches Ertasten der Befestigungsfläche für ein Ausgleichsgewicht durchgeführt, bei dem ein Kontakt zwischen der Kontaktfläche und einer zur Hinterschnittringfläche hin verlaufenden Begrenzungsfläche der Felge hergestellt wird. Durch die radiale Bewegung des Befestigungskopfs weicht das Tastelement axial aus, so dass der Kontakt zwischen der Kontaktfläche des Tastelements und der Begrenzungsfläche erhalten bleibt, bis die Aufnahme mit dem Ausgleichsgewicht radial an der Hinterschnittringfläche und somit an der Befestigungsfläche angelangt. Der Befestigungskopf wird in Abhängigkeit des Tastergebnisses bewegt. Es handelt sich um eine rein mechanische und einfache Lösung, durch die auch die Taktzeit der Anbringung verbessert wird.

Der Tastkopf kann das Ausgleichsgewicht in Position an der Befestigungsfläche in einem Hohlraum einer Felge, insbesondere mit Hinterschnitt bringen.

Die auf die Felge während der Positionierung der Aufnahme wirkende Kraft kann reduziert werden, da das Tragelement radial verschiebbar ausgestaltet ist. Das Tragelement kann nach einem Vorschlag der Erfindung insbesondere in einer Schlittenführung gelagert und in der Schlittenführung entgegen der Kraft einer Feder radial verschiebbar gestaltet sein.

In einer Ausgestaltung der Erfindung ist das Tastelement an dem Tragelement in einer Geradführung gelagert und entgegen der Kraft einer Feder aus einer Grundstellung in eine Endstellung axial bewegbar. Das Tastelement wird durch das Herstellen des Kontakts zwischen Kontaktfläche und Begrenzungsfläche der Felge aus der Grundstellung entgegen der Federkraft axial in die Endstellung verschoben, in der die Aufnahme mit dem Ausgleichsgewicht an der Befestigungsfläche anliegt und gleichzeitig der Kontakt zwischen Kontaktfläche und Begrenzungsfläche weiterhin besteht. Sobald das Ausgleichsgewicht an der Befestigungsfläche angebracht ist und sich der Befestigungskopf radial von der Felgeninnenseite weg bewegt, wird das Tastelement durch die Federkraft in die Grundstellung gebracht. Das Verlassen und das Wiedererreichen der Grundstellung kann durch einen Sensor überwacht werden. Der Sensor kann an dem Tragelement oder dem Tastelement vorgesehen sein und die axiale Bewegung des Tastelements aus der Grundstellung heraus erfassen. Hierdurch ist es möglich, ein irrtümliches Berühren der Felge auszuschließen.

Alternativ zu Federn kann das Tastelement in einer Ausgestaltung der Erfindung mittels eines Hubzylinders axial beweglich an dem Tragelement angeordnet sein. Es kann sich entsprechend um einen Pneumatik- oder Hydraulikzylinder handeln, dessen Zylinder an dem Tragelement und dessen Kolben an dem Tastelement befestigt sind, so dass das Tastelement durch die Kräfte des Hubzylinders zurückgestellt wird.

Möglich ist ferner, dass das Tastelement mittels eines Gelenkgetriebes axial beweglich an dem Tragelement angeordnet ist. Das Tastelement kann über gelenkig gelagerte Stangen an dem Tragelement befestigt sein, so dass mindestens eine axiale Beweglichkeit des Tastelements erreicht wird. Das Gelenkgetriebe ist wartungsarm und ermöglicht eine gerichtete Bewegung des Tastelements. Alternativ kann das Tastelement über einen wälzgelagerten Linearschlitten axial beweglich an dem Tragelement befestigt sein.

Um einen Kontakt zwischen dem Tastelement und der Innenseite der Felge ohne Beschädigung der Felge zu ermöglichen, wird vorgeschlagen, dass die Kontaktfläche zumindest teilweise mit einem Kunststoff beschichtet ist. Hierdurch können gute Gleiteigenschaften, eine hohe Abrieb- und Verschleißfestigkeit sowie eine lange Lebensdauer erreicht werden. Die Kontaktfläche kann auch Bestandteil eines Bauteils, wie zum Beispiel einer Leiste sein, das an das Tastelement mittels Befestigungsmittel anbringbar ist. Das Bauteil wird in einem Bereich des Tastelements, insbesondere dem Tastkopf angeordnet, in dem der Kontakt mit der Begrenzungsfläche der Felge stattfinden soll.

Nach einem Vorschlag der Erfindung kann der Befestigungskopf mittels eines durch eine Steuereinrichtung steuerbaren Drehantriebs um eine Achse in eine beliebige Befestigungsposition an der Befestigungsfläche drehbar befestigt sein. Um das Anfahren unterschiedlicher Ausgleichspositionen zu ermöglichen, kann der Befestigungskopf um seine Drehachse drehbar sein. Diesbezüglich ist auch vorteilhaft, wenn das Tastelement eine Vielzahl von Aufnahmen aufweist, so dass der Befestigungskopf nach Anbringung eines ersten Ausgleichsgewichts in einer ersten Ausgleichsposition zur Anbringung eines weiteren Ausgleichsgewichts in eine weitere Ausgleichsposition verfährt. Ein schnelles Drehen des Befestigungskopfs wird durch den Drehantrieb erreicht.

Der Befestigungskopf kann eine durch eine Steuereinrichtung betätigbare Andrückvorrichtung zum Andrücken des Ausgleichsgewichts an die Befestigungsfläche der Felge aufweisen. Das als Klebegewicht ausgestaltete Ausgleichsgewicht kann mithilfe der Andrückvorrichtung auf die Befestigungsfläche, insbesondere in der Hinterschnittringfläche, zum Beispiel gewalzt werden, so dass ein flächiger Kontakt hergestellt wird.

In einer Ausgestaltung der Erfindung ist der Befestigungskopf an einem Arm einer programmgesteuerten Handhabungsvorrichtung angeordnet. Die Handhabungsvorrichtung kann als programmgesteuerter Roboter ausgestaltet sein, an dessen Arm der Befestigungskopf angeordnet ist. Der Roboter kann in allen drei Raumachsen bewegbar sein. Jedoch können auch einfache Handhabungsvorrichtungen gewählt werden, die lediglich das Einfahren des Befestigungskopfs in die Felgenschüssel und deren radiale Bewegung steuern. Die Steuerung des Befestigungskopfs kann kraftgesteuert oder bahngesteuert sein. Der Befestigungskopf kann vorteilhafterweise mittels einer Schnellwechselkupplung an dem Arm der Handhabungsvorrichtung angebracht sein. Ferner kann der Befestigungskopf in einer weiteren Ausgestaltung stationär an einem Maschinengestell angeordnet sein, so dass die auszuwuchtende Felge über den Ausführungsarm gestülpt wird.

Die Erfindung betrifft weiterhin ein Verfahren zur Anbringung eines Ausgleichsgewichts an einer Befestigungsfläche an einer Innenseite einer Felgenschüssel einer Felge mit einer zuvor beschriebenen Vorrichtung mit folgenden Schritten: Bewegen eines Befestigungskopfs in die Felgenschüssel, wobei der Befestigungskopf ein relativ zur Felge radial verschiebbares Tragelement umfasst, an dem ein Tastelement axial beweglich angeordnet ist, wobei das Tastelement an seinem freien Ende einen Tastkopf aufweist, der derart ausgestaltet ist, dass er in einen Hohlraum der Felge hinein bewegbar ist und der Tastkopf eine zur Felgeninnenseite hin ausgerichtete und eine konvexe Krümmungsfläche aufweisende Aufnahme für mindestens ein Ausgleichsgewicht umfasst und die der Felgeninnenseite zugewandten Seite des Tastkopfs entsprechend der Krümmung der Felgeninnenseite radial gebogen ist, wobei benachbart zur Aufnahme eine konvexe Kontaktfläche mit einem kreisförmig gebogenen Randbereich angeordnet ist; Bewegen des Befestigungskopfs radial nach außen, so dass ein Kontakt zwischen der konvexen Kontaktfläche des Tastelements und einer Begrenzungsfläche der Innenseite der Felge hergestellt wird; Fortführung der radialen Bewegung, wobei die Kontaktfläche an der Begrenzungsfläche der Innenseite entlanggleitet, bis das Ausgleichsgewicht radial mit der Befestigungsfläche in Kontakt gelangt; Anbringung des Ausgleichsgewichts an die Befestigungsfläche. Vorteilhaft ist, wenn während dem Entlangleiten der Kontaktfläche an der Begrenzungsfläche, das Tastelement in einer Geradführung axial ausweicht. Hierdurch kann eine Beschädigung der Felge durch das Tastelement vermieden werden.

Die oben dargestellten Vorteile, sowie die vorteilhaften Ausgestaltungen der Vorrichtung gelten analog auch für das Verfahren.

Die Erfindung wird nachfolgend anhand eines Ausführungsbeispiels der Erfindung näher erläutert, das in der Zeichnung dargestellt ist. Es zeigen
- Figur 1: schematische Darstellung eines Befestigungskopfs in einer Felgenschüssel einer Felge,
- Figur 2: Anlage eines Tastelements der Vorrichtung an der Felgenschüssel und
- Figur 3: Positionierung einer Aufnahme für ein Ausgleichsgewicht an einer Befestigungsfläche.

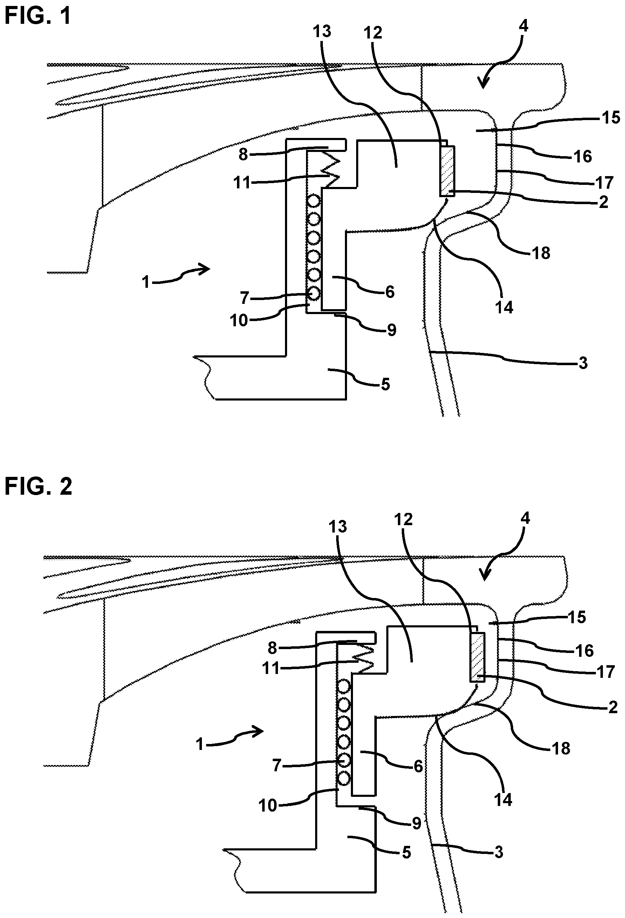

Figur 1 zeigt einen Befestigungskopf 1 zum Befestigen eines Ausgleichsgewichts 2 an einer Innenseite 3 einer Felge 4 eines Fahrzeugrades. Der Befestigungskopf 1 ist um seine Drehachse drehbar und kann mittels einer Schnellwechselkupplung an dem Ende eines Gelenkarms einer Handhabungsvorrichtung, wie zum Beispiel einem Roboter, angebracht werden, dessen Bewegung in allen drei Raumachsen steuerbar ist. Es können aber auch Ausführungsarme von einfacheren Handhabungsvorrichtungen gewählt werden, die den Befestigungskopf 1 mindestens linear in die Felgenschüssel einführen und radial zur Innenseite 3 der Felge bewegen. Der Befestigungskopf 1 kann radial verschwenkbar am Arm der Handhabungsvorrichtung befestigt und insgesamt drehbar gelagert sein. Der Befestigungskopf 1 kann programmgesteuert so positioniert werden, dass er die Ausgleichsgewichte 2 an jede Ausgleichsstelle in den vorgegebenen Ausgleichsebenen bewegen kann.

Es kann jedoch auch vorgesehen sein, dass der Befestigungskopf 1 stationär an einem Maschinengestell angeordnet ist und die Felge 4 mithilfe eines Greifers eines Handhabungsroboters über den stationären Befestigungskopf 1 gestülpt wird. Ausgestaltungen eines Befestigungskopfs 1 sind aus der DE 10 2013 108 048 B3 bekannt.

Der Befestigungskopf 1 kann an einem sich quer zur Drehachse erstreckenden Träger angeordnet sein, an dem ein parallel zur Drehachse verlaufendes und sich in die Felgenschüssel erstreckendes Tragelement 5 angeordnet ist.

Das Tragelement 5 kann radial verschiebbar gelagert sein, indem es in einer Schlittenführung quer zur Drehachse und zum Beispiel entgegen der Kraft einer Feder bewegbar ist.

An dem Tragelement 5 ist ein stufenförmiges Tastelement 6 axial beweglich gelagert. Hierfür kann das Tastelement 6 mittels einem Linearschlitten geführt sein, der durch ein Wälzlager 7 in einer durch einen oberen und einen unteren Endanschlag 8, 9 begrenzten Führung 10 beweglich gelagert ist. In der Führung 10 ist zwischen dem Tragelement 5 und dem oberen Endanschlag 8 des Tastelements 6 eine Rückholfeder 11 angeordnet, so dass das Tastelement 6 entgegen der Kraft der Rückholfeder 11 aus einer Endstellung axial bewegt wird. Durch die Anordnung einer weiteren, am unteren Endanschlag 9 befestigten Feder, kann das Tastelement 6 in einer Mittelstellung vorliegen, aus der es entgegen der Kraft der Federn axial nach oben oder unten bewegbar ist. Ein Sensor kann die Position des Tastelements 6 überwachen und zur Steuerung des Befestigungskopfs 1 genutzt werden. Der Sensor kann an dem Tragelement 5 oder dem Tastelement 6 angeordnet sein. Das Tastelement 6 kann auch über einen Pneumatik- oder Hydraulikzylinder an dem Tragelement 5 axial beweglich angeordnet sein. Möglich ist auch die Lagerung des Tastelements 6 an dem Tragelement 5 mittels einem Gelenkgetriebe, bei dem das Tastelement 6 mittels gelenkig gelagerten Stangen an dem Tragelement 5 beweglich angeordnet ist.

An einem freien Ende des Tastelements 6 ist eine Aufnahme 12 für mindestens ein Ausgleichsgewicht 2 angeordnet. Die Aufnahme 12 kann aus einer gebogenen Schiene von rechteckigem Querschnitt mit einer konvexen Krümmungsfläche bestehen. Die Aufnahme 12 kann magnetisches Material umfassen und zum Halten von magnetisierbaren Ausgleichsgewichten 2 ausgebildet sein. Durch die magnetische Wirkung kann das Ausgleichsgewicht 2 an der Aufnahme 12 transportsicher gehalten werden. Auch eine Klemmung des Ausgleichsgewichts 2 in der Aufnahme 12 kann vorgesehen sein. Hierbei kann das Ausgleichsgewicht 2 mittels Rastfinger in Position gehalten werden. Auch das Halten des Ausgleichsgewichts 2 mithilfe eines Unterdrucks ist möglich. Das Befestigen des Ausgleichsgewichts 2 an der Felge 4 erfolgt durch Kleben. Hierzu ist das Ausgleichsgewicht 2 auf der der Innenseite 3 zugewandten Seite mit einer Klebstoffschicht benetzt. Die Anbringung des Klebegewichts kann durch eine fortlaufende radiale Bewegung des Befestigungskopfs 1 erfolgen, wobei das Klebegewicht federnd in der Aufnahme 12 gehalten wird, um eine entsprechende Mindestanpresskraft ohne Beschädigung der Felge 4 zu erreichen. Das Ausgleichsgewicht 2 kann zum Beispiel aufgewalzt werden.

Das Tastelement 6 weist einen die Aufnahme 12 umfassenden Tastkopf 13 auf, dessen der Felgeninnenseite 3 zugewandten Seite entsprechend der Krümmung der Innenseite 3 radial gebogen ist. Benachbart zu der Aufnahme 12 ist eine konvexe Kontaktfläche 14 mit einem kreisförmig gebogenen Randbereich angeordnet. Die Schräge der Kontaktfläche 14 weist eine Steigung von circa 45° auf und läuft über die vollständige Breite des Tastkopfs 13. Die Kontaktfläche 14 könnte auch gekrümmt ausgestaltet sein. Die Kontaktfläche 14 ist aus einem Gleitkunststoff gefertigt oder zumindest mit einem solchen beschichtet. Aus Fertigungsgründen kann auch das Tastelement 10 vollständig oder zumindest teilweise aus einem Kunststoff gefertigt sein.

Ein Auswuchten von Fahrzeugrädern mit Klebegewichten ist auch bei Rädern mit einem Hinterschnitt möglich. Hierbei ist vor der Speichenwurzel ein Hohlraum 15. Die vorgegebenen Ausgleichsebenen befinden sich meist an einer in dem Hohlraum 15 vorliegenden und konkav ausgebildeten Hinterschnittringfläche 16 und sind axial voneinander beabstandet, das heißt, eine zylindrische Befestigungsfläche 17 der Ausgleichsgewichte 2 liegt innerhalb der Hinterschnittringfläche 16. Die konkreten Ausgleichsstellen und die Größe der Ausgleichsgewichte 2 werden von einer Unwuchtmessvorrichtung errechnet und zum Beispiel an eine elektronischen Robotersteuerung übermittelt.

Der Befestigungskopf 1 wird zur Anbringung des Ausgleichsgewichts 2 an die Befestigungsfläche 17 gesteuert, so dass er in die Felgenschüssel eintaucht und die Aufnahme 12 der Felgeninnenseite 3 im Wesentlichen radial beabstandet gegenübersteht. Die Aufnahme 12 befindet sich in dieser Ausgangsposition noch nicht auf einer gleichen Höhe mit der Befestigungsfläche 17, sondern ist etwas tiefer angeordnet, so dass die Kontaktfläche 14 des Tastelements 6 einer zur Hinterschnittringfläche 16 hin verlaufenden schrägen Begrenzungsfläche 18 der Felgeninnenseite 3 gegenübersteht.

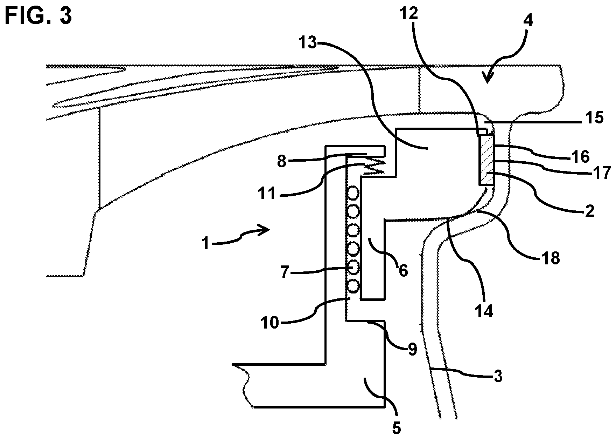

Figur 2 zeigt eine Anlage des Tastelements 6 der Vorrichtung an der Felgenschüssel und Figur 3 die Positionierung der Aufnahme 12 für das Ausgleichsgewicht 2 an der Befestigungsfläche 17. Der Befestigungskopf 1 bewegt sich in einer radialen Bewegung quer zur Drehachse in Richtung der Felgeninnenseite 3, wobei die Kontaktfläche 14 des Tastelements 6 mit der schrägen Begrenzungsfläche 18 in Kontakt gelangt. Durch die fortlaufende radiale Bewegung des Befestigungskopfs 1 gleitet die Kontaktfläche 14 an der schrägen Begrenzungsfläche 18 entlang. Das Tastelement 6 weicht hierbei aufgrund der beweglichen Lagerung am Tragelement 5 in axialer Richtung entgegen der Kraft der Rückholfeder 11 aus und wird aus einer Grundstellung verschoben. Die Grundstellung kann hierbei, je nach der Ausgestaltung der axial beweglichen Lagerung des Tastelements 6 am Tragelement 5, eine Endposition oder eine Mittelposition sein. Möglich ist auch, dass der Tastkopf 13 mit einem nicht dargestellten Element der Felge 4 in Kontakt kommt, das oberhalb der Befestigungsfläche 17 angeordnet ist, so dass der Tastkopf 13 die Befestigungsfläche 17 antastet und das Tastelement 6 aus seiner Grundstellung nach unten ausweicht. Aufgrund der beweglichen Lagerung des Tastelements 6 wirken keine großen Kräfte auf die Felgeninnenseite 3 und eine Beschädigung der Felge 4 wird vermieden.

Die radiale Bewegung des Befestigungskopfs 1 und das axiale Ausweichen des Tastelements 6 dauern an, bis das Ausgleichsgewicht 2 radial an die Hinterschnittringfläche 16 beziehungsweise die hier vorgesehene Befestigungsfläche 17 stößt. Gleichzeitig befindet sich das Tastelement 6 in einer Endstellung, bei der die Rückholfeder 11 komprimiert ist. Das Ausgleichsgewicht 2 kann dann zum Beispiel durch Aufwalzen an der Befestigungsfläche 17 angebracht werden. Nach erfolgreicher Anbringung verfährt der Befestigungskopf 1 radial in die Ausgangsposition, so dass die Kontaktfläche 14 entlang der schrägen Begrenzungsfläche 18 gleitet und das Tastelement 6 durch die Federkraft der Rückholfeder 11 aus der Endstellung in die Grundstellung bewegt wird.

Die Höhe der Kontaktfläche 14 des Tastelements 6 ist derart gestaltet, dass sie an der schrägen Begrenzungsfläche 18 der Felge entlanggleiten kann und dort in Endstellung gelangt, wenn das Ausgleichsgewicht 2 mit seiner Klebefläche an der vorgesehenen Befestigungsfläche 17 in der Hinterschnittringfläche 16 zur Anlage kommt. Der die Aufnahme 12 umfassende und in den Hohlraum 15 des Hinterschnitts hineinragende Tastkopf 13 des Tastelements 6 ist derart bemessen, dass zum einen die Kontaktfläche 14 mit der schrägen Begrenzungsfläche 18 der Felge 4 in Kontakt gelangt und während des Anbringens des Ausgleichsgewichts 2 auch mit dieser in Kontakt bleibt und zum anderen die Aufnahme 12 mit dem Ausgleichsgewicht 2 an die Befestigungsfläche 17 gedrückt wird. Beim Andrücken des Ausgleichsgewichts 2 gegen die Befestigungsfläche 17 wird ein gegebenenfalls radial verschiebbar gelagertes Tragelement 5 entgegen der Kraft von Federn verschoben, so dass keine allzu große und gegebenenfalls die Felge 4 beschädigende Kraft auf diese wirkt.

Die Verschiebbarkeit des Tastelements 6 und die Rückholfeder 11 gewährleisten eine exakte Höhenpositionierung. Die radiale und gegebenenfalls gegen eine Federkraft wirkende Verschiebbarkeit des Tragelements 5 sorgen für eine Mindestanpresskraft. Die Steuerung des Befestigungskopfs 1 muss nicht kraftregelnd erfolgen, sondern kann positionsbezogen sein, was durch Sensoren erreicht werden kann. Weiterhin kann durch Näherungsschalter überprüft werden, ob das Tragelement 5 beziehungsweise das Tastelement 6 beim Positionieren des Tastkopfs 13 weit genug verschoben werden, um die Rückholfeder 11 und gegebenenfalls weitere, vorliegende Federn entsprechend einer geforderten Mindestanpresskraft zu spannen.

## Patentansprüche

1. Vorrichtung zur Anbringung eines Ausgleichsgewichts (2) an einer Befestigungsfläche (17) an einer Innenseite (3) einer Felgenschüssel einer Felge (4), umfassend einen Befestigungskopf (1), der so bemessen ist, dass er in die Felgenschüssel hinein passt und der ein relativ zur Felge (4) radial verschiebbares Tragelement (5) umfasst, an dem ein Tastelement (6) axial beweglich angeordnet ist, wobei das Tastelement (6) an seinem freien Ende einen Tastkopf (13) aufweist, der derart ausgestaltet ist, dass er in einen Hohlraum (15) der Felge (4) hinein bewegbar ist und der Tastkopf (13) eine zur Felgeninnenseite (3) hin ausgerichtete und eine konvexe Krümmungsfläche aufweisende Aufnahme (12) für mindestens ein Ausgleichsgewicht (2) umfasst und die der Felgeninnenseite (3) zugewandten Seite des Tastkopfs (13) entsprechend der Krümmung der Felgeninnenseite (3) radial gebogen ist, wobei benachbart zur Aufnahme (12) eine konvexe Kontaktfläche (14) mit einem kreisförmig gebogenen Randbereich angeordnet ist, und wobei der Befestigungskopf (1) derart ausgestaltet ist, dass die Kontaktfläche (14) in Kontakt mit einer Begrenzungsfläche (18) der Innenseite (3) bring- und an dieser entlang verschiebbar ist, bis das Ausgleichsgewicht (2) radial mit der Befestigungsfläche (17) in Kontakt gelangt.

2. Vorrichtung nach Anspruch 1, **dadurch gekennzeichnet, dass** das Tastelement (6) an dem Tragelement (5) in einer Geradführung gelagert und entgegen der Kraft einer Feder (11) aus einer Grundstellung in eine Endstellung axial bewegbar ist.

3. Vorrichtung nach Anspruch 2, **dadurch gekennzeichnet, dass** das Tastelement (6) mittels eines Hubzylinders axial beweglich an dem Tragelement (5) angeordnet ist.

4. Vorrichtung nach einem der vorhergehenden Ansprüche, **dadurch gekennzeichnet, dass** die Kontaktfläche (14) zumindest teilweise mit einem Kunststoff beschichtet ist.

5. Vorrichtung nach einem der vorhergehenden Ansprüche, **dadurch gekennzeichnet, dass** ein Sensor an dem Tragelement (5) oder dem Tastelement (6) vorgesehen ist, der die axiale Bewegung des Tastelements (6) erfasst.

6. Vorrichtung nach einem der vorhergehenden Ansprüche, **dadurch gekennzeichnet, dass** der Befestigungskopf (1) mittels eines durch eine Steuereinrichtung steuerbaren Drehantriebs um eine Achse in eine beliebige Befestigungsposition an der Befestigungsfläche (17) drehbar ist.

7. Vorrichtung nach einem der vorhergehenden Ansprüche, **dadurch gekennzeichnet, dass** die Vorrichtung eine programmgesteuerte Handhabungsvorrichtung umfasst, an deren Arm der Befestigungskopf (1) angeordnet ist.

8. Vorrichtung nach Anspruch 7, **dadurch gekennzeichnet, dass** der Befestigungskopf (1) mittels einer Schnellwechselkupplung an dem Arm der Handhabungsvorrichtung angebracht ist.

9. Vorrichtung nach einem der Ansprüche 1 bis 6, **dadurch gekennzeichnet, dass** die Vorrichtung ein Maschinengestell umfasst, an dem der Befestigungskopf (1) stationär angeordnet ist.

10. Verfahren zum Anbringung eines Ausgleichsgewichts (2) an einer Befestigungsfläche (17) an einer Innenseite (3) einer Felgenschüssel einer Felge (4) mit einer Vorrichtung gemäß den Ansprüchen 1 bis 9 mit folgenden Schritten:
Bewegen eines Befestigungskopfs (1) in die Felgenschüssel, wobei der Befestigungskopf (1) ein relativ zur Felge (4) radial verschiebbares Tragelement (5) umfasst, an dem ein Tastelement (6) axial beweglich angeordnet ist, wobei das Tastelement (6) an seinem freien Ende einen Tastkopf (13) aufweist, der derart ausgestaltet ist, dass er in einen Hohlraum (15) der Felge (4) hinein bewegbar ist und der Tastkopf (13) eine zur Felgeninnenseite (3) hin ausgerichtete und eine konvexe Krümmungsfläche aufweisende Aufnahme (12) für mindestens ein Ausgleichsgewicht (2) umfasst und die der Felgeninnenseite (3) zugewandten Seite des Tastkopfs (13) entsprechend der Krümmung der Felgeninnenseite (3) radial gebogen ist, wobei benachbart zur Aufnahme (12) eine konvexe Kontaktfläche (14) mit einem kreisförmig gebogenen Randbereich angeordnet ist;
Bewegen des Befestigungskopfs (1) radial nach außen, so dass ein Kontakt zwischen der konvexen Kontaktfläche (14) des Tastelements (6) und einer Begrenzungsfläche (18) der Innenseite (3) der Felge hergestellt wird;
Fortführung der radialen Bewegung, wobei die Kontaktfläche (14) an der Begrenzungsfläche (18) der Innenseite (3) entlanggleitet, bis das Ausgleichsgewicht (2) radial mit der Befestigungsfläche (17) in Kontakt gelangt;
Anbringung des Ausgleichsgewichts (2) an die Befestigungsfläche (17).

11. Verfahren nach Anspruch 10, **dadurch gekennzeichnet, dass** während des Entlanggleitens der Kontaktfläche (14) an der Begrenzungsfläche (18), das Tastelement (6) in einer Geradführung axial ausweicht.

## Claims

1. A device for attaching a balancing weight (2) to a mounting surface (17) on an inner side (3) of a rim dish of a wheel rim (4), comprising a mounting head (1) which is dimensioned in such a way that it fits into the rim dish and which includes a support element (5), which is radially displaceable relative to the wheel rim (4) and on which a feeler element (6) is axially movably arranged, wherein the feeler element (6) has at its free end a feeler head (13), which is configured such that it is movable into a cavity (15) of the wheel rim (4) and the feeler head (13) comprises a receptacle (12) for at least one balancing weight (2), that is aligned towards the rim inner side (3) and has a convex curved surface, and the side of the feeler head (13) facing the rim inner side (3) is bent radially according to the curvature of the rim inner side (3), wherein adjacent to the receptacle (12) a convex contact surface (14) with a circularly curved edge region is arranged, and wherein the mounting head (1) being configured in such a way that the contact surface (14) can be brought into contact with a boundary surface (18) of the inner side (3), and may be displaced along said boundary surface (18) until the balancing weight (2) comes radially into contact with the mounting surface (17).

2. The device of claim 1, **characterized in that** the feeler element (6) is supported on the support element (5) within a straight guide and is axially movable against the force of a spring (11) from a basic position to an end position.

3. The device of claim 2, **characterized in that** the feeler element (6) is axially movably positioned by mean of a lifting cylinder on the support element (5).

4. The device of any of the preceding claims, **characterised in that** the contact surface (14) is at least partially coated with a plastics material.

5. The device of any of the preceding claims, **characterised in that** on the support element (5) or the feeler element (6) a sensor is provided, which senses the axial movement of the feeler element (6).

6. The device of any of the preceding claims, **characterised in that** the mounting head (1) can be brought into any mounting position on the mounting surface (17) by rotation about an axis by means of a rotary drive controllable by a control device.

7. The device of any of the preceding claims, **characterised in that** the device comprises a program-controlled handling device, on the arm of which the mounting head (1) is positioned.

8. The device of claim 7, **characterized in that** the mounting head (1) is attached to the arm of the handling device by means of a quick-change coupling.

9. The device of any of claims 1 to 6, **characterized in that** the device comprises a machine frame, on which the mounting head (1) is positioned stationary.

10. A method for attaching a balancing weight (2) to a mounting surface (17) on an inner side (3) of a rim dish of a wheel rim (4) with a device according to the claims 1 to 9, comprising the following steps:
moving a mounting head (1) into the rim dish, wherein the mounting head (1) comprises a support element (5), which is radially displaceable relative to the wheel rim (4) and on which a feeler element (6) is axially movably arranged, wherein the feeler element (6) has at its free end a feeler head (13), which is configured such that it is movable into a cavity (15) of the wheel rim (4) and the feeler head (13) comprises a receptacle (12) for at least one balancing weight (2), that is aligned towards the rim inner side (3) and has a convex curved surface, and the side of the feeler head (13) facing the rim inner side (3) is bent radially according to the curvature of the rim inner side (3), wherein adjacent to the receptacle (12) a convex contact surface (14) with a circularly curved edge region is arranged;
moving the mounting head (1) radially outwards so that contact is made between a convex contact surface (14) of the feeler element (6) and a boundary surface (18) of the inner side (3) of the wheel rim;
continuing the radial movement, wherein the contact surface (14) slides along the boundary surface (18) of the inner side (3) until the balancing weight (2) comes radially into contact with the mounting surface (17);
attaching the balancing weight (2) to the mounting surface (17).

11. The method of claim 10, **characterized in that** while the contact surface (14) is sliding along the boundary surface (18), the feeler element (6) axially deviates within a straight guide.

## Revendications

1. Dispositif pour appliquer un poids d'équilibrage (2) sur une surface de fixation (17) d'une face intérieure (3) d'un disque de jante d'une jante (4), comprenant une tête de fixation (1) qui est dimensionnée pour tenir dans le disque de jante, et qui comprend un élément de support (5) pouvant être déplacé radialement par rapport à la jante (4), sur lequel un élément de palpage (6) est disposé de manière à pouvoir se déplacer axialement, l'élément de palpage (6) présentant à son extrémité libre une tête de palpage (13) configurée pour pouvoir être déplacée dans une cavité (15) de la jante (4), et la tête de palpage (13) comprenant un logement (12) orienté vers la face intérieure (3) de la jante et présentant une surface de courbure convexe pour au moins un poids d'équilibrage (2), et le côté de la tête de palpage (13) tourné vers la face intérieure (3) de la jante étant courbé radialement de façon correspondante à la courbure de la face intérieure (3) de la jante, une surface de contact (14) convexe avec une zone de bord courbée en forme de cercle étant disposée au voisinage du logement (12), et la tête de fixation (1) étant conçue de telle sorte que la surface de contact (14) peut être mise en contact avec une surface de délimitation (18) de la face intérieure (3) et être déplacée le long de celle-ci jusqu'à ce que le poids d'équilibrage (2) vienne en contact radialement avec la surface de fixation (17).

2. Dispositif selon la revendication 1, **caractérisé en ce que** l'élément de palpage (6) est logé sur l'élément de support (5) dans un guide rectiligne et peut être déplacé axialement à l'encontre de la force d'un ressort (11) d'une position de base à une position finale.

3. Dispositif selon la revendication 2, **caractérisé en ce que** l'élément de palpage (6) est disposé sur l'élément de support (5) de manière à pouvoir se déplacer axialement au moyen d'un vérin de levage.

4. Dispositif selon l'une des revendications précédentes, **caractérisé en ce que** la surface de contact (14) est revêtue au moins partiellement d'une matière plastique.

5. Dispositif selon l'une des revendications précédentes, **caractérisé en ce qu'**un capteur est prévu sur l'élément de support (5) ou sur l'élément de palpage (6), lequel capteur détecte le mouvement axial de l'élément de palpage (6).

6. Dispositif selon l'une des revendications précédentes, **caractérisé en ce que** la tête de fixation (1) peut être amenée dans une position de fixation quelconque sur la surface de fixation (17) par rotation autour d'un axe au moyen d'un entraînement en rotation pouvant être commandé par un dispositif de commande.

7. Dispositif selon l'une des revendications précédentes, **caractérisé en ce que** le dispositif comprend un dispositif de manipulation commandé par programme et sur le bras duquel est disposée la tête de fixation (1).

8. Dispositif selon la revendication 7, **caractérisé en ce que** la tête de fixation (1) est montée sur le bras du dispositif de manipulation au moyen d'un accouplement à changement rapide.

9. Dispositif selon l'une des revendications 1 à 6, **caractérisé en ce que** le dispositif comprend un bâti de machine sur lequel la tête de fixation (1) est disposée de façon stationnaire.

10. Procédé pour appliquer un poids d'équilibrage (2) sur une surface de fixation (17) d'une face intérieure (3) d'un disque de jante d'une jante (4) avec un dispositif selon les revendications 1 à 9, comprenant les étapes suivantes :
Déplacement d'une tête de fixation (1) dans le disque de jante, la tête de fixation (1) comprenant un élément porteur (5) pouvant être déplacé radialement par rapport à la jante (4), sur lequel un élément de palpage (6) est disposé de manière à pouvoir se déplacer axialement, l'élément de palpage (6) présentant à son extrémité libre une tête de palpage (13) conçue pour pouvoir être déplacée dans une cavité (15) de la jante (4), et la tête de palpage (13) comprenant un logement (12) orienté vers la face intérieure (3) de la jante et présentant une surface de courbure convexe pour au moins un poids d'équilibrage (2), et le côté de la tête de palpage (13) tourné vers la face intérieure (3) de la jante étant courbé radialement de façon correspondante à la courbure de la face intérieure (3) de la jante, une surface de contact (14) convexe avec une zone de bord courbée en forme de cercle étant disposée au voisinage du logement (12) ;
Déplacement de la tête de fixation (1) radialement vers l'extérieur de manière à établir un contact entre la surface de contact (14) convexe de l'élément de palpage (6) et une surface de délimitation (18) de la face intérieure (3) de la jante ;
Poursuite du mouvement radial, la surface de contact (14) glissant le long de la surface de délimitation (18) de la face intérieure (3) jusqu'à ce que le poids d'équilibrage (2) vienne en contact radial avec la surface de fixation (17) ;
Application du poids d'équilibrage (2) sur la surface de fixation (17).

11. Procédé selon la revendication 10, **caractérisé en ce que**, pendant le glissement de la surface de contact (14) le long de la surface de délimitation (18), l'élément de palpage (6) se déporte axialement dans un guide rectiligne.
